Europäisches Patentamt

European Patent Office

Office européen des brevets

(19)

(11) **EP 0 978 150 B1**

(12) **FASCICULE DE BREVET EUROPEEN**

(45) Date de publication et mention
de la délivrance du brevet:
**05.09.2001 Bulletin 2001/36**

(51) Int Cl.⁷: **H01M 4/58**

(21) Numéro de dépôt: **98921576.9**

(22) Date de dépôt: **21.04.1998**

(86) Numéro de dépôt international:
**PCT/FR98/00799**

(87) Numéro de publication internationale:
**WO 98/48467 (29.10.1998 Gazette 1998/43)**

(54) **MATERIAU D'ELECTRODE POSITIVE A BASE D'OXYSULFURE DE TITANE POUR GENERATEUR ELECTROCHIMIQUE ET SON PROCEDE DE PREPARATION**

POSITIVES ELEKTRODENMATERIAL AUF BASIS VON TITANOXYSULFID FÜR ELEKTROCHEMISCHEN GENERATOR UND VERFAHREN ZU DESSEN HERSTELLUNG

POSITIVE ELECTRODE MATERIAL BASED ON TITANIUM OXYSULPHIDE FOR ELECTROCHEMICAL GENERATOR AND METHOD FOR MAKING SAME

(84) Etats contractants désignés:
**AT BE CH CY DE DK ES FI FR GB GR IE IT LI LU MC NL PT SE**

(30) Priorité: **22.04.1997 FR 9704960**

(43) Date de publication de la demande:
**09.02.2000 Bulletin 2000/06**

(73) Titulaire: **Centre National De La Recherche Scientifique**
**75794 Paris Cedex 16 (FR)**

(72) Inventeur: **MEUNIER, Georges**
**F-33650 Saint Médard d'Erans (FR)**

(74) Mandataire: **Des Termes, Monique et al**
**Société Brevatome**
**3, rue du Docteur Lancereaux**
**75008 Paris (FR)**

(56) Documents cités:
WO-A-90/05387          US-A- 4 066 824
US-A- 4 243 624        US-A- 4 934 922
US-A- 5 147 739

• MEUNIER G ET AL: "NEW AMORPHOUS TITANIUM OXYSULFIDES OBTAINED IN THE FORM OF THIN FILMS" THIN SOLID FILMS, vol. 205, no. 2, 1 décembre 1991, pages 213-217, XP000261323
• JONES S D ET AL: "Thin film rechargeable Li batteries" SOLID STATE IONICS, DIFFUSION & REACTIONS, AUG. 1994, NETHERLANDS, vol. 69, no. 3-4, ISSN 0167-2738, pages 357-368, XP002051779

## Description

### Domaine technique

La présente invention a pour objet un matériau à base d'oxysulfure de titane, utilisable en particulier comme électrode positive dans un générateur électrochimique ou une cellule électrochrome.

De façon plus précise, elle concerne la réalisation de générateurs électrochimiques ou de cellules électrochromes, en particulier en couches minces, dont le principe de fonctionnement est basé sur l'insertion et la désinsertion (intercalation-désintercalation) d'ions de métal alcalin ou de protons dans l'électrode positive.

Des générateurs électrochimiques de ce type peuvent trouver de nombreuses applications, par exemple sous la forme de microgénérateurs ayant une épaisseur totale de quelques $\mu m$, dans des systèmes pour sauvegarder les mémoires de micro-systèmes lors de coupures de courant ou comme systèmes intégrés dans des cartes à mémoire du type des cartes bancaires.

Ces générateurs peuvent aussi être utilisés comme système électrochrome lorsque l'électrode positive change de couleur au cours de l'insertion, ce qui les rend intéressants pour l'affichage d'informations ou mieux encore lorsque l'électrode négative est transparente, pour des vitrages changeant de couleur selon les besoins.

### Etat de la technique antérieure

Des générateurs électrochimiques de ce type utilisant un chalcogénure ou oxychalcogénure de titane comme électrode positive, sont décrits en particulier dans le document WO-A-90/05387. Dans ce document, le matériau d'électrode positive est constitué d'une couche de composé répondant à la formule :

$$TiO_aX_b$$

dans laquelle X représente un atome de soufre, de sélénium ou de tellure, et a et b sont tels que a est au plus égal à 2, b est au plus égal à 3 et (a + b) est dans l'intervalle allant de 2 à 3.

La couche est préparée par pulvérisation cathodique de type magnétron, à partir d'une cible de disulfure de titane $TiS_2$ contenant 5 % en atome d'oxygène.

Ce matériau d'électrode présente des propriétés électrochimiques intéressantes mais son dépôt par pulvérisation cathodique, sous la forme de couche mince, présente l'inconvénient de nécessiter la fabrication de cibles de $TiS_2$ à partir de poudres commerciales de $TiS_2$ qui contiennent toujours quelques pourcents d'oxygène. Or, en raison de la structure lamellaire de $TiS_2$, la poudre se compacte assez facilement mais le frittage est délicat car il y a départ de soufre quelle que soit la température utilisée. De ce fait, lors de la pulvérisation cathodique, on doit limiter la puissance appliquée sur la cible de sulfure de titane à une valeur inférieure à 2 Watts/cm$^2$ sous peine de voir la cible se cliver suivant l'épaisseur.

Par ailleurs, bien que les performances d'un générateur électrochimique utilisant ce matériau d'électrode sous la forme de couche mince soient satisfaisantes, il serait intéressant d'améliorer encore ces performances, en particulier la capacité massique du générateur. Des recherches ont donc été entreprises pour obtenir des matériaux d'électrodes du même type dans de meilleures conditions et augmenter de plus les performances du générateur électrochimique utilisant de telles électrodes.

Le document US-A-4 508 608 décrit un procédé de préparation d'une cathode à base de chalcogénure de haute porosité, par pulvérisation cathodique de molécules d'un chalcogénure de métal de transition sur et dans un substrat collecteur de courant de haute porosité. Le chalcogénure peut être en particulier un sulfure de titane tel que le disulfure ou trisulfure de titane.

L'énergie massique du trisulfure de titane (840 Wh/kg) est très élevée par rapport à celle du disulfure de titane (485 Wh/kg) mais l'emploi de $TiS_3$ pose certains problèmes car l'intercalation de lithium n'est que faiblement réversible dans $TiS_3$.

La présente invention a précisément pour objet un matériau d'électrode positive à base d'oxysulfure de titane qui pallie ces inconvénients et qui conduit à une amélioration notable de la performance du microgénérateur, en présentant de plus l'avantage de convenir à la fabrication d'électrodes en couches minces à l'échelle industrielle.

### Exposé de l'invention

Selon l'invention, le matériau d'électrode positive pour générateur électrochimique est constitué d'une couche mince d'un composé amorphe de formule :

$$TiO_aS_{3+b}$$

dans laquelle a et b sont tels que :

$$0 < a \leq 0,5$$

$$0 < b \leq 0,7.$$

Selon l'invention, grâce au choix d'un matériau d'électrode du type $TiO_aS_{3+b}$ qui peut être déposé par pulvérisation cathodique, on obtient une couche de matériau isotrope et amorphe de densité beaucoup plus faible que celle du $TiS_3$ massif, qui résiste très bien de ce fait à l'insertion et à la désinsertion d'ions de métal alcalin ou de protons. En effet, cette faible densité correspond à une structure amorphe expansée, il n'y a pas de gonflement du matériau lors de l'insertion des ions. Ainsi, la couche ne se détériore pas car le transport des ions s'effectue sans changement de morphologie. Cette couche isotrope offre également l'avantage de permettre une bonne diffusion du lithium dans toutes les directions.

Selon l'invention, cette couche mince d'oxysulfure de titane répondant à la formule précitée peut être préparée par pulvérisation cathodique radiofréquence d'une cible de $TiS_3$. Dans le composé $TiS_3$, l'atome de titane est tétravalent comme dans $TiS_2$ et le soufre est présent sous la forme de sulfure et d'un groupement disulfure : $Ti^{4+}S^{2-}S_2^{2-}$.

Pour ce dépôt, l'emploi d'une cible de $TiS_3$ est particulièrement intéressant car $TiS_3$ peut être obtenu aisément par réaction chimique de titane et de soufre sous forme de poudres, en quantités stoechiométriques, en tube scellé sous vide à 500°C. Dans ces conditions, on obtient une poudre de $TiS_3$ de couleur noire, dont le spectre X correspond à celui de $TiS_3$. Cette poudre peut être compactée aisément, par exemple sous une pression de 294 MPa (3 tonnes/cm$^2$) et frittée, par exemple à une température de 500°C, en tube scellé sous vide. On peut fabriquer ainsi des cibles de diamètre beaucoup plus important, par exemple de 50 ou 75 mm de diamètre, que dans le cas des cibles de $TiS_2$. Aussi, ce procédé peut être mis en oeuvre à l'échelle industrielle pour la fabrication d'électrodes en couches minces, ce qui n'était pas possible avec le procédé de l'art antérieur utilisant une cible de $TiS_2$, en raison de la nécessité de limiter la puissance appliquée aux cibles de $TiS_2$.

L'invention a également pour objet un générateur électrochimique utilisant le matériau d'électrode positive précité. Ce générateur comporte une électrode positive, une électrode négative capable de libérer un proton ou un ion de métal alcalin et un électrolyte conducteur ionique disposé entre les deux électrodes, et il se caractérise en ce que l'électrode positive est formée d'une couche mince d'un composé amorphe de formule :

$$TiO_aS_{3+b}$$

dans laquelle a et b sont tels que :

$$0 < a \leq 0,5$$

$$0 < b \leq 0,7.$$

ladite couche étant disposée sur un substrat.
Les substrats utilisés pour supporter la couche mince du composé amorphe peuvent être très divers, conducteurs ou isolants, souples ou rigides. Généralement, on utilise un substrat conducteur de l'électricité ou un substrat isolant recouvert d'une couche de matériau conducteur de l'électricité sur laquelle est disposée la couche mince du composé $TiO_aS_{3+b}$.

Le matériau conducteur de l'électricité peut être en particulier un métal, par exemple Cr, Pt, Ni, Al, etc., du silicium monocristallin, ou un oxyde conducteur de l'électricité comme les oxydes mixtes d'indium et d'étain (ITO).

Le support isolant peut être un matériau céramique, du pyrex, un verre ou une matière plastique résistant aux conditions de pulvérisation cathodique, par exemple une matière plastique souple telle qu'un polyester comme le polytéréphtalate d'étylène-glycol, ou un polyimide.

Ces substrats souples permettent en particulier la réalisation en continu d'électrodes de grande surface car on peut les faire défiler en continu dans l'enceinte de dépôt par pulvérisation cathodique.

Dans le générateur décrit ci-dessus, l'électrode négative peut être réalisée en particulier en lithium ou en matériau contenant du lithium. Le matériau contenant du lithium peut être un alliage de lithium ou un composé de lithium.

L'électrode négative est de préférence sous la forme d'une couche mince déposée par des procédés classiques, par exemple par évaporation sous vide ou par pulvérisation cathodique. Des couches minces obtenues par de tels procédés sont très avantageuses car le départ des ions ne crée pas de vide à l'interface.

L'électrode négative peut aussi être réalisée en alliage ou en composé comportant d'autres métaux alcalins, par exemple du sodium, du potassium, du césium ou du rubidium, ou en un composé capable de libérer des protons comme les hydrures métalliques tels que $LaNi_5H_6$, et les hydroxydes comme l'hydroxyde d'iridium.

Lorsque l'électrode négative est en lithium, on peut utiliser comme électrolyte solide un verre conducteur par ions lithium. Ce verre doit être un isolant électronique pour éviter l'autodécharge du générateur mais sa conductivité ionique doit être la plus élevée possible.

En effet, l'électrolyte doit jouer deux rôles essentiels : être un excellent isolant électronique entre les deux électrodes, et être un bon conducteur ionique. Son épaisseur doit être suffisante et la couche doit être rigoureusement exempte de défauts tels que des trous ou fissures, qui auraient pour conséquence immédiate une mise en court-circuit du générateur lors du dépôt d'électrode négative.

Des verres à base d'oxyde de bore, d'oxyde de lithium et de sel de lithium peuvent être utilisés, par exemple des verres contenant en diverses proportions $B_2O_3$, $Li_2O$, et $Li_rX'$ avec X' représentant un anion capable de se combiner avec le lithium sous la forme d'un sel et r représentant la valence de l'anion X'.

A titre d'exemples d'anions X' utilisables, on peut citer les anions halogénures et sulfate.

On pourrait aussi utiliser des verres conducteurs à base de sulfures, par exemples des verres au sulfure de bore, sulfure de lithium et sel de lithium.

Lorsque l'électrode négative comprend d'autres métaux alcalins ou des protons, l'électrolyte peut être constitué de verres du même type contenant les mêmes ions de métal alcalin ou des protons.

L'électrolyte peut être sous la forme d'une couche réalisée par évaporation sous vide ou pulvérisation cathodique. De préférence, on utilise la pulvérisation cathodique pour obtenir une couche continue, de très faible épaisseur, sans défauts.

On peut aussi utiliser comme électrolyte des matériaux solides en polymère conducteur ionique, par exemple du type polyoxyéthylène.

Le générateur électrochimique de l'invention peut être réalisé par des procédés classiques, en déposant successivement sur un substrat recouvert d'une couche conductrice de l'électricité formant collecteur de courant, une première couche du composé amorphe $TiO_aS_{3+b}$, une deuxième couche d'électrolyte solide et une troisième couche formant l'électrode négative.

Selon l'invention, la première couche de composé $TiO_aS_{3+b}$ constituant l'électrode positive est déposée par pulvérisation cathodique, de préférence par pulvérisation cathodique radiofréquence ; ceci permet d'obtenir une couche mince, compacte, continue et homogène, ayant un profil extrêmement régulier sans porosité superficielle.

L'épaisseur de la couche de $TiO_aS_{3+b}$ peut varier dans une large gamme. Généralement, on préfère une couche mince ayant une épaisseur de 200 nm à 10 μm.

Cette structure est particulièrement avantageuse car l'électrolyte déposé ensuite peut être sous la forme d'une couche d'épaisseur plus faible que dans le cas des générateurs électrochimiques « tout solide » de l'art antérieur.

De ce fait, même en utilisant des électrolytes ayant une conductivité ionique faible, on peut obtenir des densités de courant plus élevées que dans les générateurs électrochimiques de l'art antérieur en utilisant des épaisseurs plus faibles d'électrolyte sans risque de courts-circuits.

De plus, en choisissant comme électrolyte un verre conducteur ionique, organique ou inorganique, à conductivité par ions de métal alcalin tels que le lithium, le seul élément mobile est le lithium, les anions étant bloqués dans la structure d'électrolyte. Ainsi, le transport ionique s'effectue par un seul élément et le système en couches minces facilite ce transport et permet d'obtenir des performances améliorées.

L'oxygène dans le matériau isotrope $TiO_aS_{3+b}$ provient de l'oxygène présent à titre d'impureté dans la cible de $TiS_3$.

Pour la réalisation du générateur électrochimique, la deuxième couche d'électrolyte solide et la troisième couche formant l'électrode négative peuvent être déposées par des procédés classiques convenant à la réalisation de couches minces. On peut en particulier déposer l'électrolyte solide par pulvérisation cathodique ou évaporation sous vide, et l'électrode négative par évaporation sous vide.

Le principe de fonctionnement du générateur décrit ci-dessus est basé sur l'insertion et la désinsertion d'un ion de métal alcalin ou d'un proton dans l'électrode positive.

Le fonctionnement du générateur correspond à la réaction globale :

$$Ti_4^+ + Li \rightarrow Ti_3^+ + Li^+$$

Ceci correspond à une force électromotrice de 2,945 volts.

Ce schéma est théorique car, d'une part, l'activité de l'ion Lithium peut être différente et, d'autre part, d'autres espèces ioniques provenant par exemple du soufre peuvent participer à la réaction électrochimique.

D'autres caractéristiques et avantages de l'invention apparaîtront mieux à la lecture de la description qui suit, donnée bien entendu à titre illustratif et non limitatif, en référence aux dessins annexés.

**Brève description des dessins.**

La figure 1 représente les résultats de l'analyse par rétrodiffusion de particules α d'une couche du composé $TiO_{0,2}S_{3,3}$ conforme à l'invention.

La figure 2 représente l'évolution de la conductivité électronique (log σ) en fonction de la température (1000/T en K) pour le composé de formule $TiO_{0,2}S_{3,3}$.

La figure 3 représente schématiquement en coupe verticale un générateur électrochimique conforme à l'invention.

La figure 4 est une courbe de cyclage d'un générateur conforme à l'invention avec une densité de courant de 10 μA/cm².

La figure 5 est une courbe de cyclage du même générateur avec une densité de courant de 50 μA/cm².

La figure 6 représente les courbes de charge, à travers des résistances dont les valeurs vont de 1 kΩ à 27 kΩ, d'un générateur conforme à l'invention.

La figure 7 représente les courbes de décharge à travers des résistances dont les valeurs vont de 1 kΩ à 47 kΩ, d'un générateur conforme à l'invention.

**Exposé détaillé des modes de réalisation**

**Exemple 1 : Préparation d'une couche mince de $TiO_{0,2}S_{3,3}$.**

On part d'un substrat constitué par une lame de verre de 3,7 x 2,5 x 0,1 cm recouverte d'une couche de chrome de 0,2 μm d'épaisseur déposée par pulvérisation cathodique et formant un collecteur de courant. On dépose sur ce substrat une couche d'oxysulfure de titane de composition $TiO_{0,2}S_{3,3}$ par pulvérisation cathodique à partir d'une cible de $TiS_3$ de 50 mm de diamètre, dans les conditions suivantes :

- pression d'argon : $5.10^{-1}$ Pa,
- puissance : 50 W soit 2,54 $W/cm^2$,
- tension-cible : 400 V,
- distance cible-substrat : 5 cm,
- durée du dépôt : 1 h 20 min, et
- vitesse de dépôt : 0,5 μm/h.

On obtient ainsi une couche d'oxysulfure de titane $TiO_{0,2}S_{3,3}$ dont l'épaisseur déterminée à l'aide d'un profilomètre est: de 0,7 μm pour une masse de 0,7 mg, pour une surface de 4 $cm^2$.

La structure amorphe de la couche est confirmée par spectrométrie aux rayons X, le spectre ne révélant aucune raie de diffraction.

On détermine ensuite la composition et la densité de la couche par rétrodiffusion des particules $\alpha$ (RBS).

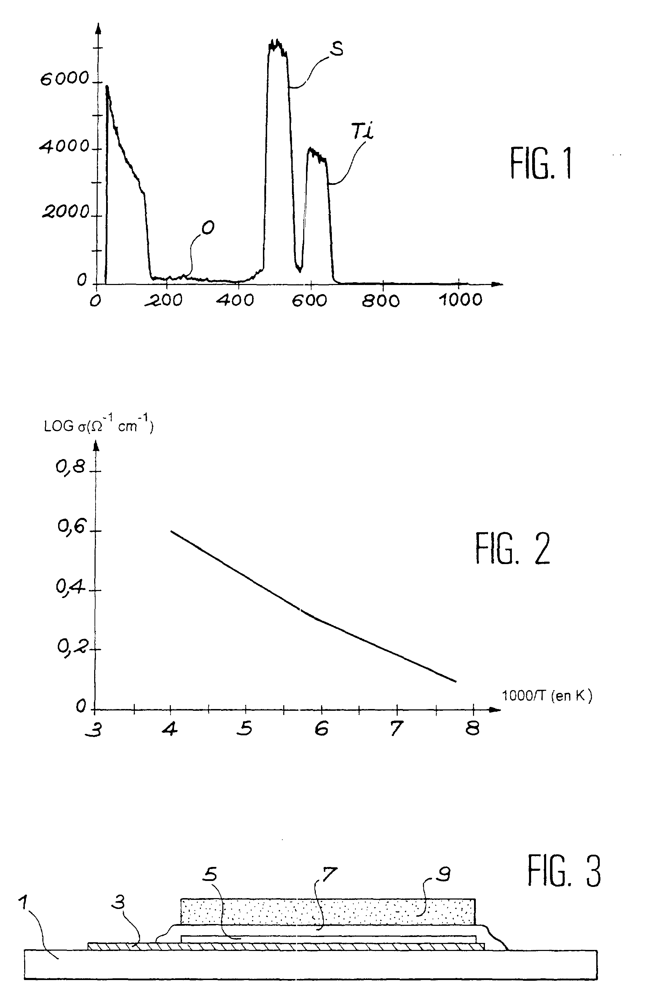

Les résultats obtenus sont représentés sur la figure 1. Sur cette figure, les trois derniers pics correspondent respectivement à O, S et Ti, le pic correspondant à O étant très petit. Par intégration des pics, on peut déduire la composition de la couche qui correspond à $TiO_{0,2}5_{3,3}$. On note ainsi la faible présence d'oxygène qu'il n'est pas possible d'éliminer totalement de la couche bien que la cible soit constituée uniquement de $TiS_3$, et un enrichissement en soufre de la couche par rapport à la cible. Un séjour à l'air d'un échantillon pendant plusieurs heures ne montre pas de modification du spectre RBS, ce qui permet de conclure que ce matériau est faiblement hygroscopique.

La densité de la couche mince mesurée par spectrométrie RBS et par pesée est de 2,50, elle est ainsi beaucoup plus faible que celle du $TiS_3$ massif de départ dont la densité est de 3,20. Cette faible densité est favorable à l'intercalation du lithium.

On prépare de la même façon une couche de $TiO_{0,2}S_{3,3}$ d'une épaisseur de 2,25 μm par pulvérisation cathodique d'une cible de $TiS_3$, et on mesure sa conductivité électronique à des températures allant de 100 à 300 K.

La figure 2 illustre les résultats obtenus et représente les variations du logarithme de la conductivité $\sigma$ (en $ohm^{-1}cm^{-1}$) en fonction de la température 1000/T en K. On remarque ainsi que le comportement de la couche de $TiO_{0,2}S_{3,3}$ est de type semi-conducteur avec une valeur de la conductivité de 0,2 $ohm^{-1}cm^{-1}$ à la température ambiante.

**Exemple 2 : Préparation d'un microgénérateur tout solide.**

Pour préparer ce microgénérateur, on dépose sur l'ensemble obtenu dans l'exemple 1, une couche d'électrolyte, puis une couche de lithium pour former l'électrode négative.

a) dépôt de la couche d'électrolyte.

L'électrolyte utilisé est un verre de composition $1B_2O_3$-0, $8Li_2O$-0, $8Li_2SO_4$.

On dépose une couche de verre de cette composition par pulvérisation cathodique en utilisant le même appareillage que précédemment et une cible de verre obtenue par pastillage d'une poudre de verre de même composition suivi d'un frittage à l'air à 600°C pendant 6 h.

Les conditions de dépôt sont les suivantes :

- pression d'argon : $10^{-2}$ hPa
- puissance : 100 W, soit 2,26 $W/cm^2$
- tension cible : 250 v
- durée : .4 h.

On obtient ainsi une couche d'électrolyte dont l'épaisseur mesurée à l'aide d'un profilomètre de 1,5 μm.

Cette couche est amorphe aux rayons X.

b) Dépôt de l'électrode négative.

L'électrode négative est réalisée en lithium et déposée par évaporation sous vide secondaire par bombardement électronique. Les conditions de dépôt sont les suivantes :

- vide résiduel : $5.10^{-7}$ hPa
- distance creuset-substrat : 20 cm
- durée de l'évaporation : 5 minutes.

On obtient ainsi un film de lithium dont l'épaisseur contrôlée par microbalance à quartz est de 5 μm environ. On dépose ensuite une couche de 1 μm d'aluminium par pulvérisation cathodique pour protéger le lithium.

On encapsule ensuite le générateur au moyen d'une résine époxy hydrophobe, puis d'une lame de verre pour le protéger de l'humidité.

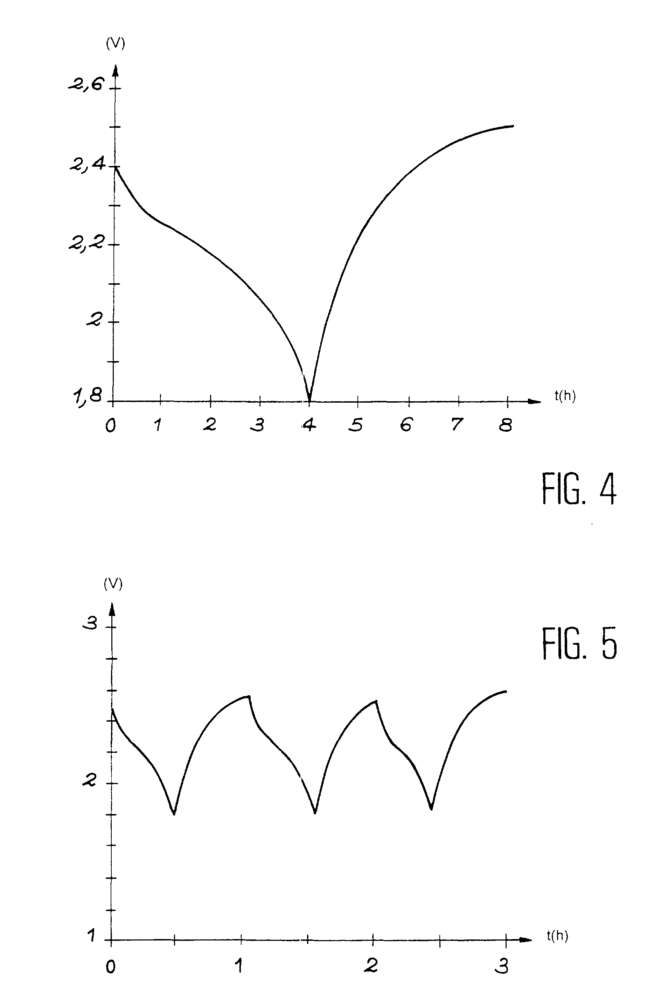

La figure 3 représente en coupe verticale le microgénérateur ainsi obtenu. Sur cette figure, on voit que le microgénérateur comprend un substrat (1) en verre recouvert d'une couche (3) de chrome jouant le rôle de collecteur de courant, d'une couche (5) d'oxysulfure de titane $TiO_{0,2}S_{3,3}$, d'une couche (7) d'électrolyte en verre conducteur ionique et de la couche (9) de lithium constituant l'électrode négative.

On vérifie les propriétés électrochimiques de ce générateur en effectuant des cyclages à courant constant et des charges et décharges à travers des résistances de valeurs données. Avec ce générateur, la tension en circuit ouvert est habituellement de 2,5 V. Après un stockage de plusieurs mois, la tension reste constante, il n'y a pas d'auto-décharge.

Sur la figure 4, on a représenté la courbe obtenue lors d'un cyclage du générateur sous une densité de courant de 10 $\mu$A/cm$^2$, entre une tension de 2,5 V et 1,8 V.

La figure 5 représente la courbe de cyclage obtenu lorsqu'on réalise le cyclage du générateur entre 2,5 V et 1,8 V sous une densité de courant de 50 $\mu$A/cm$^2$.

Dans les deux cas, on remarque un bon comportement du générateur.

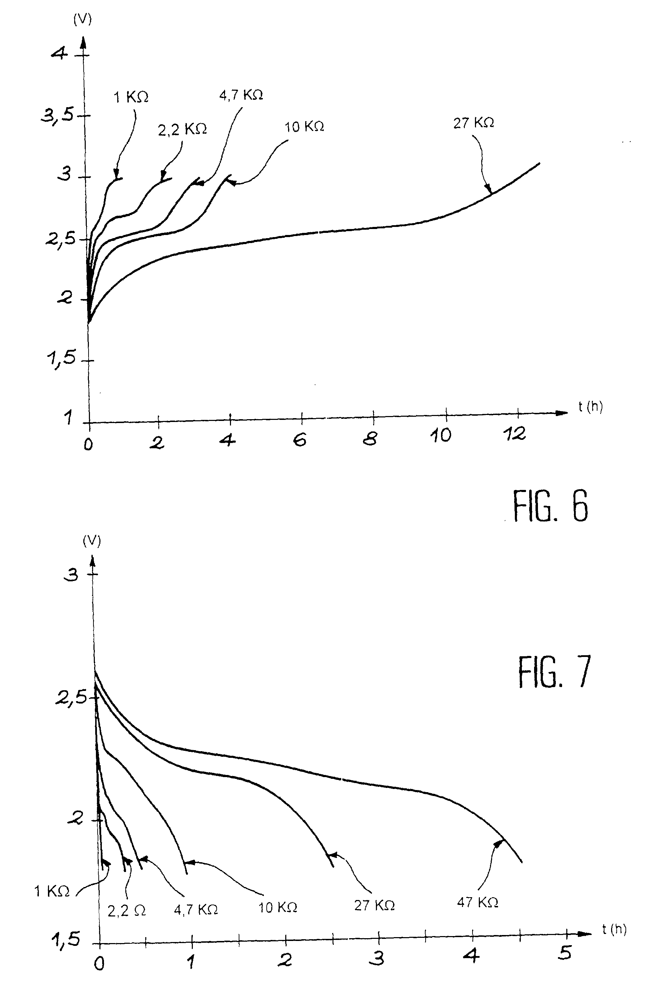

La figure 6 représente les courbes de charge du même générateur à travers des résistances de 1 k$\Omega$, 2,2 k$\Omega$, 4,7 k$\Omega$, 10 k$\Omega$ et 27 k$\Omega$.

La figure 7 représente les courbes de décharge à travers des résistances de 1 k$\Omega$, de 2,2 k$\Omega$, de 4,7 k$\Omega$, de 10 k$\Omega$, de 27 k$\Omega$ et de 47 k$\Omega$. Sur ces courbes, on remarque que pour des valeurs de résistance inférieures à 1 k$\Omega$, c'est la résistance interne du générateur qui impose la densité du courant, celle-ci est voisine de 0,5 mA/cm$^2$. Pour une telle densité de courant, la tension chute rapidement. Avec une résistance de 1 k$\Omega$, le générateur est rechargé en moins d'une heure.

Pour une densité de courant de 10 $\mu$A/cm$^2$, la capacité massique du générateur est de l'ordre de 300 Ah/kg et l'énergie massique est voisine de 650 Wh/kg.

A titre comparatif, on précise que dans le cas du générateur de l'art antérieur (WO-A-90/05387) avec un cyclage sous une densité de courant de 10 $\mu$A/cm$^2$ entre 2,5 volts et 1 volt, on obtient une capacité massique de 125 Ah/kg et une énergie massique de 230 Wh/ kg.

On remarque ainsi que le générateur électrochimique de l'invention présente des performances très supérieures, sa capacité massique étant augmentée de plus 50 %. L'amélioration est très importante par rapport au générateur de l'art antérieur.

De plus, l'invention permet la réalisation de cibles de TiS$_3$ de grande taille en vue d'applications à l'échelle industrielle pour la fabrication d'électrodes en couches minces.

## Revendications

1. Matériau d'électrode positive pour générateur électrochimique constitué d'une couche mince d'un composé amorphe de formule :

$$TiO_a S_{3+b}$$

dans laquelle a et b sont tels que :

$$0 < a \leq 0,5$$

$$0 < b \leq 0,7.$$

2. Matériau selon la revendication 1, dans lequel le composé amorphe répond à la formule :

$$Ti\, O_{0,2}\, S_{3,3}.$$

3. Procédé de préparation d'une électrode positive de générateur électrochimique consistant à déposer sur un substrat une couche mince d'un composé amorphe de formule :

$$TiO_a\, S_{3+b}$$

dans laquelle a et b sont tels que :

$$0 < a \leq 0,5$$

$$0 < b \leq 0,7$$

par pulvérisation cathodique radiofréquence d'une cible de TiS$_3$.

4. Procédé selon la revendication 3, dans lequel le substrat est un substrat isolant recouvert d'une couche de matériau conducteur de l'électricité.

5. Procédé selon la revendication 4, dans lequel le matériau conducteur de l'électricité est du chrome et dans lequel on dépose le chrome sur le substrat isolant par pulvérisation cathodique.

6. Générateur électrochimique comportant une électrode positive, une électrode négative capable de libérer un proton ou un ion de métal alcalin et un électrolyte conducteur ionique disposé entre les deux électrodes, **caractérisé en ce que** l'électrode positive est formée d'une couche mince d'un composé amorphe de formule $TiO_aS_{3+b}$ dans laquelle a et b sont tels que :

$$0 < a \leq 0,5$$

$$0 < b \leq 0,7,$$

ladite couche étant disposée sur un substrat.

7. Générateur selon la revendication 6, dans lequel le composé amorphe répond à la formule :

$$TiO_{0,2}S_{3,3}$$

**8.** Générateur selon la revendication 6 ou 7, dans lequel le substrat est un substrat isolant recouvert d'une couche de matériau conducteur de l'électricité sur laquelle est disposée la couche mince du composé $TiO_aS_{3+b}$.

**9.** Générateur selon la revendication 8, dans lequel le matériau conducteur de l'électricité est du chrome.

**10.** Générateur selon l'une quelconque des revendications 6 à 9, dans lequel l'électrode négative est en lithium.

**11.** Générateur selon l'une quelconque des revendications 6 à 10, dans lequel l'électrolyte est en verre conducteur par ions lithium.

**12.** Générateur selon la revendication 11, dans lequel le verre conducteur est un verre à base de borale de lithium ayant la composition :

$$1B_2O_3\text{-}0,8Li_2O\text{-}0,8Li_2SO_4.$$

**Patentansprüche**

**1.** Positives Elektrodenmaterial für elektrochemischen Generator, gebildet durch eine dünne Schicht einer amorphen Verbindung der Formel:

$$TiO_aS_{3+b}$$

bei der a und b so sind, dass:

$$0 < a \leq 0,5$$

$$0 < b \leq 0,7.$$

**2.** Material nach Anspruch 1, bei dem die amorphe Verbindung folgender Formel entspricht:

$$TiO_{0,2}S_{3,3}.$$

**3.** Herstellungsverfahren der positiven Elektrode eines elektrochemischen Generators, bei dem auf einem Substrat eine dünne Schicht einer amorphen Verbindung abgeschieden wird, die folgender Formel entspricht:

$$TiO_aS_{3+b}$$

bei der a und b so sind, dass:

$$0 < a \leq 0,5$$

$$0 < b \leq 0,7$$

durch Hochfrequenzsputtern eines $TiS_3$-Targets.

**4.** Verfahren nach Anspruch 3, bei dem das Substrat ein isolierendes Substrat ist, überzogen mit einer Schicht aus elektrisch leitfähigem Material.

**5.** Verfahren nach Anspruch 4, bei dem das elektrisch leitfähige Material Chrom ist und bei dem man das Chrom durch Sputtern auf dem isolierenden Substrat abscheidet.

**6.** Elektrochemischer Generator mit einer positiven Elektrode, einer negativen Elektrode, fähig ein Alkalimetallproton oder- ion freizugeben, und ein lonenleiterelektrolyt, vorgesehen zwischen den beiden Elektroden, **dadurch gekennzeichnet**, dass die positive Elektrode durch eine dünne Schicht aus einer amorphen Verbindung der Formel $TiO_aS_{3+b}$ gebildet wird, bei der a und b so sind, dass:

$$0 < a \leq 0,5$$

$$0 < b \leq 0,7,$$

wobei die genannte Schicht auf einem Substrat vorgesehen ist.

**7.** Generator nach Anspruch 6, bei dem die amorphe Verbindung folgender Formel entspricht:

$$TiO_{0,2}S_{3,3}$$

**8.** Generator nach Anspruch 6 oder 7, bei dem das Substrat ein isolierendes Substrat ist, überzogen mit einer Schicht aus elektrisch leitfähigem Material, auf der die dünne Schicht der $TiO_aS_{3+b}$-Verbindung abgeschieden ist.

**9.** Generator nach Anspruch 8, bei dem das elektrisch leitfähige Material Chrom ist.

**10.** Generator nach einem der Ansprüche 6 bis 9, bei dem die negative Elektrode aus Lithium ist.

**11.** Generator nach einem der Ansprüche 6 bis 10, bei dem das Elektrolyt aus Glas ist, leitfähig durch Lithiumionen.

**12.** Generator nach Anspruch 11, bei dem das leitfähige Glas ein Glas auf Lithiumborat-Basis mit folgender Zusammensetzung ist:

$$1 \, B_2O_3\text{-}0,8Li_2O\text{-}0,8Li_2SO_4.$$

**Claims**

**1.** Material for a positive electrode for an electrochemical generator made up of a thin layer of an amorphous compound of formula :

$$TiO_aS_{3+b}$$

in which a and b are such that :

$$0 < a \le 0.5$$

$$0 < b \le 0.7.$$

**2.** Material according to Claim 1, in which the amorphous compound corresponds to the formula :

$$TiO_{0.2}S_{3.3}.$$

**3.** Method of preparation of a positive electrode of an electrochemical generator consisting of depositing onto a substrate a thin layer of an amorphous compound of formula :

$$TiO_aS_{3+b}$$

in which a and b are such that :

$$0 < a \le 0.5$$

$$0 < b \le 0.7$$

by radiofrequency cathode sputtering from a $TiS_3$ target.

**4.** Method according to Claim 3, in which the substrate is an insulating substrate covered by a layer of electrically conducting material.

**5.** Method according to Claim 4, in which the electrically conducting material is chromium and in which the chromium is deposited onto the insulating substrate by cathode sputtering.

**6.** Electrochemical generator comprising a positive electrode, a negative electrode capable of liberating a proton or an alkali metal ion and an ion conducting electrolyte arranged between the two electrodes, **characterised in that** the positive electrode is formed from a thin layer of an amorphous compound of formula $TiO_aS_{3+b}$ in which a and b are such that :

$$0 < a \le 0.5$$

$$0 < b \le 0.7$$

said layer being arranged on a substrate.

**7.** Generator according to Claim 6, in which the amorphous compound corresponds to the formula :

$$TiO_{0.2}S_{3.3}.$$

**8.** Generator according to Claim 6 or 7, in which the substrate is an insulating substrate covered by a layer of electrically conducting material on which is arranged the thin layer of the compound $TiO_aS_{3+b}$.

**9.** Generator according to Claim 8, in which the electrically conducting material is chromium.

**10.** Generator according to any one of Claims 6 to 9, in which the negative electrode is made of lithium.

**11.** Generator according to any one of Claims 6 to 10, in which the electrolyte is a glass which conducts lithium ions.

**12.** Generator according to Claim 11, in which the glass conductor is a glass based on a lithium-boron compound having the composition :

$$1B_2O_3\text{-}O, 8Li_2O\text{-}O, 8Li_2SO_4.$$

FIG. 1

FIG. 2

FIG. 3

FIG. 4

FIG. 5

FIG. 6

FIG. 7